# EUROPEAN PATENT APPLICATION

(11) **EP 2 439 916 A1**
(43) Date of publication of application: **11.04.2012**
(21) Application number: 12150143.1
(22) Date of filing: 09.11.2005
(51) Int. Cl.: H04M 1/725, G06F 9/445, H04N 7/14, H04W 8/24

(54) **Mobile telephone terminal provided with adding/changing of operations**

(30) Priority: 10.11.2004 JP 2004326226
(62) Divisional of application: 05024403.7
(71) Applicant: NEC Corporation, Tokyo 108-8001 (JP)
(72) Inventor: Uchikawa, Tatsuya, Tokyo (JP); Furuyama, Syunji, Japan (JP)
(74) Representative: Baronetzky, Klaus

(57) **Abstract**

Users implement additions/changes of functions of mobile telephone terminal themselves without difficulty and fulfill widely-ranged needs belonging to respective users. A mobile telephone terminal which is provided with a connecting part (106) to be connected to a detachably attachable camera (105-1) and executes process corresponding to functions of the camera (105-2) by connecting the camera (105-2) to the connecting part (106) comprises a communication controlling unit (114) of implementing communication control for transmitting/receiving predetermined information to/from the base station (2), a connection detecting unit (112) for detecting the camera (105-2) connected to the connecting part (106) and generating a detection signal being a signal related to the detection, and a driver requesting unit (115) for requesting a driver for booting the camera (105-2) based on the detection signal from the base station (2) and generating request information being information related to the request. The mobile telephone terminal transmits request information to the base station (2) by communication control that the communication controlling unit (114) implements, and receives the requested driver from the base station (2).

## Description

### BACKGROUND OF THE INVENTION

The present invention relates to a mobile telephone terminal of adding/changing functions for receiving predetermined services, a base station communicating with the mobile telephone terminal, a communication system of establishing a communication mode in the communication and a method of adding/changing functions in a mobile telephone terminal.

### Description of Related Art

Model types of mobile telephone terminals that are going on sale are widely-ranged inclusive of such as so-called entry model and high-end model. However, its specification mode is determined and standardized by manufacturers of the mobile telephone terminals. For example, the number of pixels of a camera mounted on a mobile telephone terminal and types of liquid crystal used for liquid crystal screen are determined based on appropriate specifications at the side of manufacturers.

However, respective users of mobile telephone terminals have widely-ranged needs of their own for the above described functions. And, it is hard to say that the above described specification mode has completely fulfilled those needs. That is, under the circumstances, such a need is left unmet on the level of an individual user.

It is extremely difficult for a user who has purchased a mobile telephone terminal to make additions/changes on its functions for himself. The reason is that drivers accompanied by those additions/changes are required as well, and changes in the software of the main body of a mobile telephone terminal are needed. These are complicated to users.

Japanese Patent Application No. HEI 09-44437 has disclosed "Method and Apparatus of Controlling Device Driver and Information Processing Apparatus" that facilitates changes or replacement of functions of a device driver loader, makes it possible to read a device driver from a network and makes the fixing work at the occurrence of failures easy. However, a device driver apparatus disclosed in Japanese Patent Application No. HEI 09-44437 is effective in helping "the fixing work at the occurrence of failures". Therefore, a person who operates and repairs computer systems being started up by the apparatus is deemed to be a specialist on the system such as, for example, a system engineer and a programmer, and mainly such a specialist is deemed to utilize this invention. Therefore, the invention described in Japanese Patent Application No. HEI 09-44437 is originally and mainly not for a user of an information processing apparatus represented by mobile telephone terminals, that is, not for a consumer who has purchased the information processing apparatus. An object, configurations, effects and the like in that invention are completely different.

In view of the above described circumstances, problems to be solved by the present invention are to allow users to make additions/changes to functions of mobile telephone terminals for themselves without difficulty and to fulfill widely-ranged needs of respective users.

### SUMMARY OF THE INVENTION

In accordance with the present embodiments, a mobile telephone terminal provided with a connecting part configuring a component to be connected to a detachably attachable module, where upon connection of said module to said connecting part, process corresponding to functions of the module are performed, comprising communication controlling means for establishing communication state with a base station and for controllling communication for transmitting/receiving predetermined information to/from the base station, connection detecting means for detecting the module connected to the connecting part and generating a detection signal being a signal related to the detection, and driver requesting means for requesting a driver for booting the module based on the detection signal from the base station and generating request information being information related to the request, wherein the request information is transmitted to the base station by communication control that the communication controlling means implements and the requested driver is received from the base station.

When the driver boots a module connected to the connecting part, there exist restriction levels that restrict a range allowable for a start-up operation, and the base station comprises restriction level selecting means for selecting the restriction level based on a predetermined input.

In accordance with another aspects of the present embodiments, a base station with communication controlling means for establishing communication with mobile telephone terminals and for controlling communication for transmitting/receiving predetermined information to/from the mobile telephone terminal, including driver storing means for storing a driver for booting a predetermined module and driver responding means for responding to a request for a driver raised by the mobile telephone terminal and generating response information being information related to the response, wherein the response information is transmitted to the mobile telephone terminal by communication control implemented by the communication controlling means, the driver which the mobile telephone terminal has requested is read out from the driver storing means and the driver is transmitted to the mobile telephone terminal.

The base station may further comprise accounting information managing means for storing and managing accounting information being information related to the charged fees in presence of a communication fee charged for establishment of a communication state with a mobile telephone terminal, information fee charged for transmitting and providing particular information to a mobile telephone terminal and the other fees charged to the mobile telephone terminal, wherein the accounting information managing means stores and manages, within the accounting information, information related to a driver information fee being an information fee charged for the driver being transmitted and provided.

Moreover, when the driver boots a predetermined module, there are restriction levels that restrict a range allowable for the start-up operation, and the driver information fee is characterized to be an information fee charged corresponding to the restriction levels.

In addition, with identification information for identifying mobile telephone terminal, the base station may further comprise authentication managing means for storing and managing the identification information and proceeding with authentication procedure for the mobile telephone terminal based on the identification information, wherein the authentication managing means proceeds with the authentication procedure when the response information is transmitted to the mobile telephone terminal by communication control that the communication controlling means implements.

In addition, the base station may further comprise, in presence of identification information for identifying a mobile telephone terminal, mounted driver managing means for storing and managing the identification information and managing a driver mounted on the mobile telephone terminal based on the identification information, wherein, when conditions that allow an update of the driver mounted on the mobile telephone terminal are fulfilled under the management of the mounted driver managing means, a driver necessary for the update is read out from the driver storing means by communication control implemented by the communication controlling means so that a driver necessary for the update is transmitted to the mobile telephone terminal.

In accordance with further aspects of the present embodiments, a communication system comprises one or more mobile telephone terminal(s) and a base station mutually establishing a communication state and transmitting/receiving predetermined information with each other, where the mobile telephone terminal comprises a connecting part configuring a component to be connected to a detachably attachable module, wherein process corresponding to functions of the module by connecting the module to the connecting part is executed, first communication controlling means for implementing communication control for transmitting/receiving predetermined information to/from the base station, connection detecting means for detecting the module connected to the connecting part and generating a detection signal being a signal related to the detection, and driver requesting means for requesting a driver for booting the module based on the detection signal to the base station and generating request information being information related to the request, and the base station comprises second communication controlling means for controlling communication for transmitting/receiving predetermined information to/from the mobile telephone terminal, driver storing means for storing a driver that boots a predetermined module and driver responding means for responding to the request for a driver raised by the mobile telephone terminal and generating response information being information related to the response, wherein the request information is transmitted to the base station by communication control that the first communication controlling means implements, the response information is transmitted to the mobile telephone terminal by communication control that the second communication controlling means implements and the driver that the mobile telephone terminal has requested is read out by the driver storing means and the driver is transmitted to the mobile telephone terminal.

In accordance with further aspects of the present embodiments, a method of functional changes/additions for executing process corresponding to functions of the module by connecting a module to the connecting part in a mobile telephone terminal provided with a connecting part configuring a component to be connected to a detachably attachable module, comprises the steps of detecting a module connected to the connecting part and generating a detection signal being a signal related to the detection, requesting a driver for booting the module based on the detection signal from a base station which a communication state has been established, receiving a requested driver from the base station, and the driver's booting the module and performing process corresponding to functions of the module.

The present invention enables users themselves to implement additions/changes of functions of mobile telephone terminal without difficulty and to fulfill widely-ranged needs belonging to respective users.

### BRIEF DESCRIPTION OF THE DRAWINGS

The objects and features of the present invention will become more apparent from the consideration of the following detailed description taken in conjunction with the accompanying drawings, in which:
Fig. 1 is a drawing of depicting that mobile telephone terminals 1(1), 1(2), 1(3) and so on of configuring a communication system of the present embodiment and a base station 2 have established a communication state;
Fig. 2 is a drawing of depicting appearance of the mobile telephone terminal 1 of the present embodiment schematically;
Figs. 3(a) to 3(d) are drawings of depicting procedures (a) through (d) at the time when a user changes modules related to a camera and
Fig. 4 is a block diagram depicting an internal configuration of the mobile telephone terminal 1 and the base station 2 that configure the communication system of the present embodiment.

### DESCRIPTION OF THE PREFERRED EMBODIMENTS

As follows, a best mode for carrying out a mobile telephone terminal and the like of the present invention will be described. Descriptions will appropriately refer to attached drawings submitted simultaneously with the present specification.

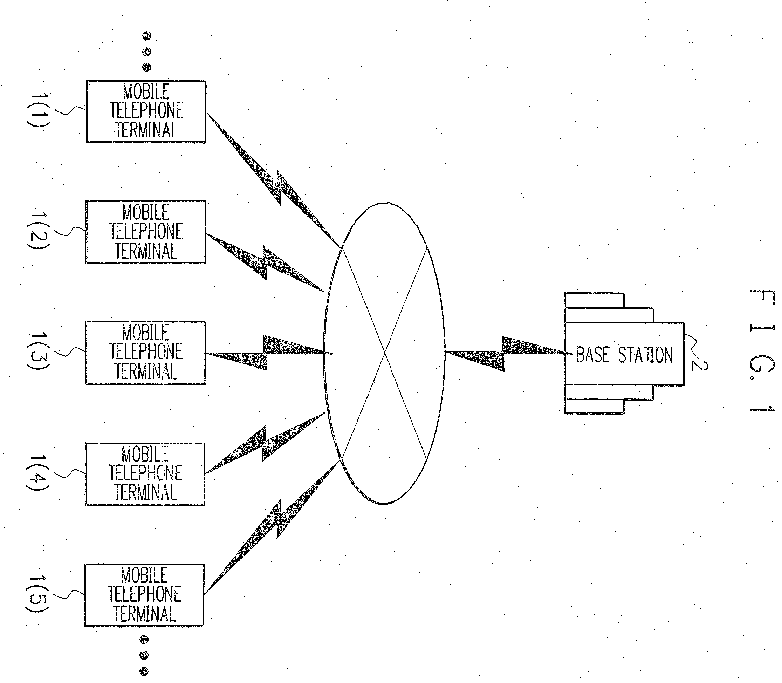

Fig. 1 is a drawing depicting that mobile telephone terminals 1(1), 1(2), 1(3) and so on and a base station 2, which forms a communication system, communicate each other. Audio information being information related to audio and image information being information related to image are transmitted and received through a predetermined communication line network. The base station 2 is in charge of controlling the information thereof.

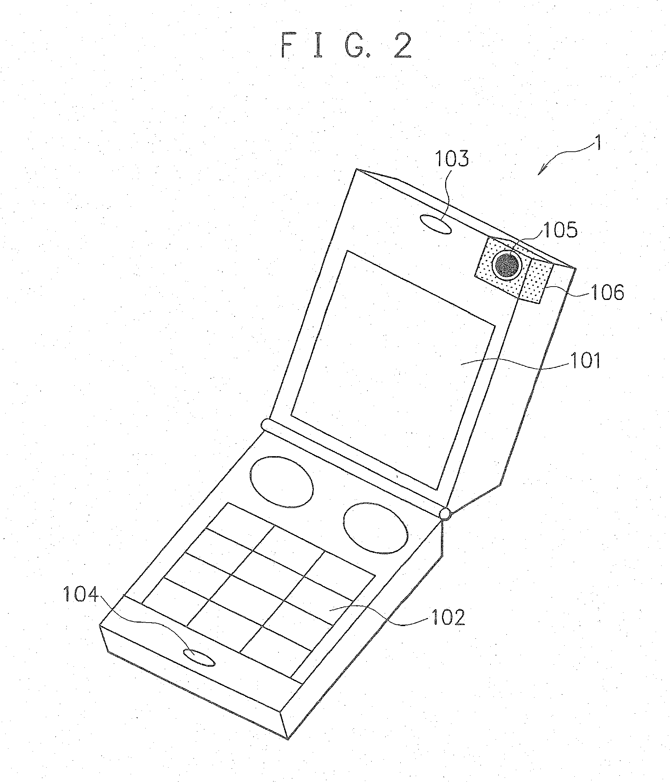

Fig. 2 is a drawing depicting an appearance of the mobile telephone terminal 1 (having functions similar to those of the mobile telephone terminals 1(1), 1(2), 1(3) and so on described in Fig. 1) of the present embodiment schematically. Reference numeral 101 denotes a liquid crystal screen, which has a function of displaying a predetermined images with liquid crystal. Reference numeral 102 denotes input buttons, and a button is pushed down so that numerals, Hiragana, alphabets or the like can be inputted. Reference numeral 103 denotes a receiver, to which a user puts his ear closer so that he can listen to outputted sound. Reference numeral 104 denotes a microphone, to which a user puts his mouth closer so that he speaks appropriate words out and inputs sound. Reference numeral 105 denotes a camera, which is a detachably attachable module and the lens of the camera is seen in appearance. And the camera 105 implements image pickup process on images that its lens has produced. This image pickup process generates image information, and an image corresponding with that image information is displayed onto the liquid crystal screen 101. Reference numeral 106 denotes a connecting part, which has a structure to become an attachment port for the detachably attachable camera 105.

The attachment port of the connecting part 106 is configured likewise the appearance of the camera 105. A user attaches the camera 105 to the connecting part 106 and thereby the attached camera 105 will be fixed. And the connecting part 106 has an interface (not shown in the drawing) for electric connection to the attached camera 105 and information related to the functions of the camera 105 is read. Thereby, the mobile telephone terminal 1 can execute processing related to its functions.

With respect to contours of the camera 105, the attachment port of the connecting part 106 and the interface for electric connection to the camera 105, common specifications are to be provided. Thereby, a module having different functions as a camera can be utilized so as to enable additions/changes of modules that a user desires.

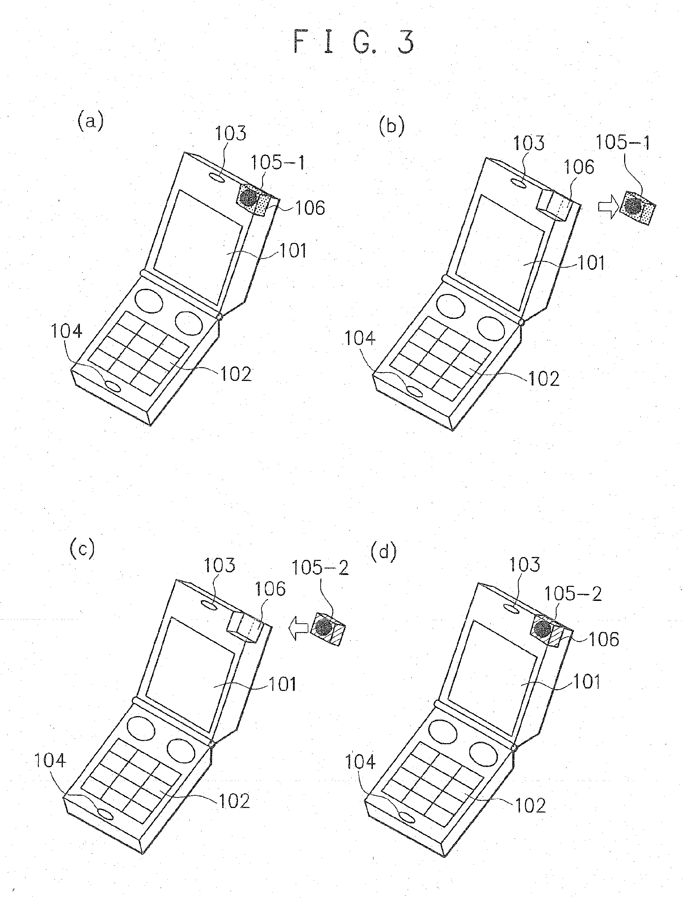

Fig. 3 depicts how such additions/changes of modules are implemented. Figs. 3(a) to 3(d) are drawings of procedures (a) through (d) at the time when a user changes modules related to a camera. A camera 105-1 as well as a camera 105-2 described in Figs. 3(a) to 3(d) are a detachably attachable module of implementing image pickup processing on images produced by the lens like the camera 105 in Fig. 2. A user proceeds with operation in the order of Figs. 3(a) → 3(b) → 3(c) → 3(d). Fig. 3(a) depicts how the mobile telephone terminal 1 looks when functions of the camera 105-1 are in a state ready for use after attachment of the camera 105-1. Fig. 3(b) depicts how the camera 105-1 and the mobile telephone terminal 1 look at the time when the camera 105-1 was taken out from the connecting part 106. Fig. 3(c) depicts how a camera 105-2 and the mobile telephone terminal 1 look at the time when the camera 105-2 is being attached to the connecting part 106. Fig. 3(d) depicts how the mobile telephone terminal 1 looks after the camera 105-2 has been attached thereto.

In Fig. 3(d), the mobile telephone terminal 1 reads information related to the functions of the camera 105-2. Then it requests a driver for starting up the camera 105-2 from the base station 2. Thereafter, the requested driver is downloaded automatically from the base station 2 and the installation process of the driver is implemented automatically as well. As a result, the user just detaches/attaches different modules and can use functions of the camera 105-2 automatically after the exchange without implementing any other operations.

Here, the above described contents described "changes" in modules, but also for "addition" similar processing is implemented. The addition processing corresponds to a case where the camera 105-1 is omitted in Figs. 3(a) and 3(b).

Now, one example is taken. The camera 105-1 is a device that operates image pickup process where the number of pixels of an image displayed on the liquid crystal screen 101 is set to one million pixels. That is, it is a device that controls the display of image information, which is generated at the image pickup process, with one million pixels under an image display controlling means 111. The camera 105-2 is a device that operates image pickup process where the number of pixels of an image displayed on the liquid crystal screen 101 is set to two million pixels. That is, it is a device that controls the display of image information, which is generated at the image pickup process, with two million pixels under the image display controlling means 111.

The mobile telephone terminal 1 was originally provided with the driver that controls an image display with one million pixels. Here, when the camera 105-2 is attached to the connecting part 106, a driver that controls an image display with two million pixels is required, and the driver is downloaded from the base station 2 and installation process is implemented. Thereafter, for the image information generated from the image pickup processing, the number of pixels of an image displayed on the liquid crystal screen 101 is two million pixels. In this procedure, a user of the mobile telephone terminal 1 never changes drivers or software for himself/herself.

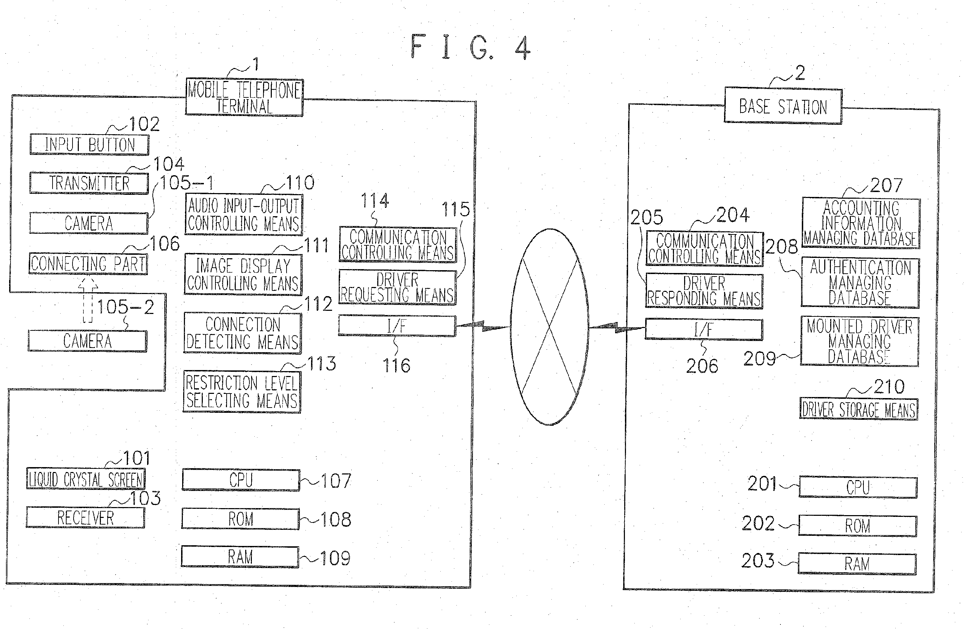

Fig. 4 is a block diagram depicting an internal configuration of the mobile telephone terminal 1 and the base station 2 that configure the communication system of the present embodiment. With reference to Fig. 4, the means and method for automatically implementing functional additions/changes of the module at the mobile telephone terminal 1 and the base station 2 will be described.

The mobile telephone terminal 1 is configured by having a liquid crystal screen 101, an input button 102, a receiver 103, a microphone 104, a camera 105-1, a connecting part 106, a CPU 107, a ROM 108, a RAM 109, audio input-output controlling means 110, image display controlling means 111, connection detecting means 112, restriction level selecting means 113, communication controlling means 114, driver requesting means 115 and an I/F (interface) 116. The liquid crystal screen 101, the input buttons 102, the receiver 103, the microphone 104, the camera 105-1 and the connecting part 106 are similar to those described with reference to Figs. 2 and 3(a) to 3(d) and descriptions thereon will be omitted.

Like the camera 105-1, the camera 105-2 gives an outer shape that matches the attachment port of the connecting part 106 and is a detachably attachable external device. This camera 105-2 is attached to the connecting part 106 and thereafter a driver in the base station 2 boots the camera 105-2. Then, the mobile telephone terminal 1 executes process corresponding to functions of the camera 105-2.

The audio input-output controlling means 110 has a function of controlling transmission/reception of audio information related to sounds inputted to the receiver 103 or outputted from the microphone 104 under predetermined conditions. This function enables a user to speak to another user of mobile telephone terminal.

The image display controlling means 111 has a function of implementing image display control on transmission/reception of image information related to images displayed on the liquid crystal screen 101 under predetermined conditions. The cameras 105-1 and 105-2 implement image pickup process, and on the generated image information, the image display controlling means 111 implements the above described image display control. Then images similar to ones that have been shot onto the liquid crystal screen 101 are displayed.

The connection detecting means 112 has functions of detecting the module 3 connected to the connecting part 106, and generating a detection signal that is a signal related to the detection. This term "connection" means electric connection, and "detection" is a detection through an interface of a common specification with the cameras 105-1 and 105-2. The generated detection signal is transmitted to the driver requesting means 115 under the control of the CPU 107.

The restriction level selecting means 113 has a function of selecting a so-called "restriction level" at occurrence of input through the input button 102. After this selection is determined, process based on that restriction level is executed under the control of the CPU 107. This "restriction level" is a level related to the restriction at the time of restricting a range where the startup can be implemented when the driver received from the base station 2 boots the module connected to the connecting part 106. There is a plurality of restriction levels. The details of the levels may be freely determined but functions that modules can exert on each step are different. Therefore, it becomes feasible to appropriately control services that users can enjoy.

The CPU 107 is an element of holistically controlling the mobile telephone terminal 1, and is in charge of controls of respective components and means configuring the mobile telephone terminal 1. The ROM 108 is storage media that has stored a program of starting up the CPU 107. The CPU 107 executes each process based on this program. It also executes the process corresponding to the functions of the cameras 105-1 and 105-2 connected to the connecting part 106. The RAM 109 is a storage element for temporarily storing predetermined information such as information related to telephone numbers and identification information for identifying the mobile telephone terminal 1 and it functions so that the information stored under the control of the CPU 107 is read out.

The communication controlling means 114 has functions of establishing communication state with the base station 2 and of implementing communication control for transmitting/receiving predetermined information to/from the base station 2. It also implements communication control with regard to transmission/reception of drivers for booting the detachably attachable module.

The driver requesting means 115 has a function of requesting from the base station 2 a driver for booting the module based on a detection signal generated by the connection detecting means 112. On that occasion, it generates request information that is information related to the request.

An I/F 116 has a function of mediating transmission and reception of predetermined information in order for the communication controlling means 114 to establish a communication state with the base station 2. It also has a function of mediating transmission and reception of the request information that the driver requesting means 115 generates.

The mobile telephone terminal 1 includes the above described configurations, and thereby, in a method of changing/adding functions of executing process corresponding to functions belonging to the module that is an object for addition or change, detects the camera 105-2 connected to the connecting part 106, generates a detection signal being a signal related to the detection and requests a driver for booting the camera 105-2 based on the detection signal from a base station with which a communication state has been established. And in receipt of the requested driver from the above described base station, the received driver is installed, and thereafter, it boots the camera 105-2. Thereby, process corresponding to the functions of the camera 105-2 is automatically executed.

On the other hand, the base station 2 is configured by a CPU 201, a ROM 202, a RAM 203, communication controlling means 204, driver responding means 205, an I/F 206, an accounting information managing database 207, an authentication managing database 208, a mounted driver managing database 209 and driver storage means 210.

The CPU 201 is an element of holistically controlling the base station 2 and is in charge of controlling operations of respective components and means configuring the base station 2. The ROM 202 is storage media that stores programs for booting the CPU 201. The CPU 201 executes each process based on this program. The RAM 203 is a storage element for temporarily storing predetermined information such as request information in receipt from the mobile telephone terminal 1 and identification information of identifying the mobile telephone terminal 1 out of a variety kinds of mobile telephone terminal and it functions so that the information stored under the control of the CPU 107 is read out.

The communication controlling means 204 has functions of establishing a communication state with the mobile telephone terminal 1 and of implementing communication control for transmitting/receiving predetermined information to/from the mobile telephone terminal 1. It also implements communication control with regard to transmission/reception of drivers for booting the detachably attachable module.

The driver responding means 205 has a function of responding to the request for a driver that the mobile telephone terminal 1 raises. Specifically, the driver responding means 205 responds to the request information that the driver requesting means 115 has generated and generates response information that is information related to the response.

The I/F 206 has a function of mediating transmission and reception of predetermined information in order for the communication controlling means 204 to establish a communication state with mobile telephone terminal 1. It also has a function of mediating the response information that the driver responding means 205 generates.

The accounting information managing database 207 includes a communication fee charged for establishment of a communication state with a mobile telephone terminal 1, an information fee charged for transmitting and providing particular information to the mobile telephone terminal 1 and the other fees charged to the mobile telephone terminal 1 and has a function of storing and managing accounting information, which is information related to the charged fee. The charged fee also includes a driver information fee being an information fee charged for drivers transmitted and provided. And the accounting information managing database 207 also stores and manages accounting information related to the driver information fee.

This driver information fee is an information fee charged corresponding to the "restriction level" that is selectable with the restriction level selecting means 113. Therefore, on the occasion of restricting the range that can boot the module attached to the connecting part 106 of the mobile telephone terminal 1, the driver information fee is set in advance corresponding to the restriction. This enables a user to select services that he/she can enjoy, taking the driver information fee into consideration.

Now taking up the case of changing the number of pixels of an image in image pickup process of the above described camera 105, the driver information fee for a driver that directs the image display controlling means 111 to control image displays at two million pixels is set higher than that of a driver that directs the means 111 to control image displays at one million pixels. That can differentiate services provided to users.

The authentication managing database 208 stores and manages identification information for identifying various types of mobile telephone terminal, and has a function of proceeding with authentication procedure, based on this identification information, for a mobile telephone terminal represented by the mobile telephone terminal 1. The authentication procedure is advanced by the function of the authentication managing database 208 when the response information that the driver responding means 205 generates under a communication control that the communication controlling means 204 implements is transmitted to the mobile telephone terminal 1. Thereby, even if unauthorized use utilizing the module is attempted, in the step of transmitting the driver to the mobile telephone terminal 1, the unauthorized use can be prevented. Here, examples of unauthorized use are use of the mobile telephone terminal 1 by a stranger masquerading as the true user, remodeling of the module by mounting a particular program onto the module to change or destroy the functions of the base station 2 and the like.

The mounted driver managing database 209 stores and manages identification information for identifying various types of mobile telephone terminal, has a function of managing, based on the identification information, a driver mounted on a mobile telephone terminal represented by the mobile telephone terminal 1. The communication controlling means 204 is characterized by exerting communication control to read out a driver necessary for the update from the later described driver storing means 210 so that the driver is transmitted to the mobile telephone terminal 1 when conditions that allow an update of the driver mounted on the mobile telephone terminal 1 are fulfilled under the management of the mounted driver managing means 209.

"Conditions that allow an update of the driver" is considered to specify a driver necessary for booting a module connected to the connection part 106 at the time of reception of request information from the mobile telephone terminal 1, and for the driver to differ from the latest driver stored in the driver storing means 210.

Utilization of functions of the mounted driver managing database 209 allows consolidating the management of information which device is mounted on each terminal. Therefore, based on a driver installed on the mobile telephone terminal, users of a particular mobile telephone terminal can be provided with special information.

The driver storing means 210 is a storage element for storing a driver that boots a predetermined module. If a stored driver is updated, the updated driver is stored. A series of process on updating is performed under the control of CPU 201.

Suppose that a driver that can implement display at two million pixels onto the liquid crystal screen 101 is stored in the driver storage means 210 of a mobile telephone terminal that currently implements display at one million pixels onto the liquid crystal screen 101. Then, information notifying that the driver is mountable can be transmitted to the above described mobile telephone terminal in advance so as to give an opportunity of updating the driver.

Here, the above described mode is a best mode for carrying out the present invention, but is not intended to establish any confinement. Therefore, within a range that will not change the points of the present invention, this mode can be transformed variously.

For example, the detachably attachable module is not limited to a camera, but may be a liquid crystal screen. In this case, a connecting part for attaching the liquid crystal screen is to be provided to the mobile telephone terminal of the present mode in advance. All needed is just to dismount the' already-attached liquid crystal screen and attach a liquid crystal screen (for example, a liquid crystal screen corresponding with a newly updated driver) having functions different from the liquid crystal screen.

Real-time comprehension on needs of users for additions/changes of functions provided to the mobile telephone terminal of the present invention will become feasible and development/expansion of a service business based on those needs is anticipated.

## Claims

1. A mobile telephone terminal provided with a connecting part configuring a component to be connected to a detachably attachable module, where upon connection of said module to said connecting part, process corresponding to functions of the module are performed, comprising:
communication controlling means for establishing communication state with a base station and for controlling communication for transmitting/receiving predetermined information to/from the base station;
connection detecting means for detecting the module connected to said connecting part and generating a detection signal being a signal related to the detection;
driver requesting means for requesting a driver for booting said module based on said detection signal from said base station and generating request information being information related to the request,wherein said request information is transmitted to said base station by communication control that said communication controlling means implements and the requested driver is received from said base station; and
selecting means for selecting services, taking driver information fee into consideration.

2. The mobile telephone terminal according to claim 1, wherein, when said driver boots a module connected to said connecting part, there exist restriction levels that restrict a range of allowable for a start-up operation, further comprising:
restriction level selecting means for selecting said restriction level based on a predetermined input.

3. The mobile telephone terminal according to claim 2, wherein the module to be connected to to said connecting part is a camera.

4. The mobile telephone terminal according to one of the preceding claims, wherein the the said connecting part comprises an interface for electric connection of the module with the telephone terminal.

5. The mobile telephone terminal according to one of the preceding claims, further comprising an image controlling means.
